(19) Europäisches Patentamt
European Patent Office
Office européen des brevets

(11) EP 2 615 336 B1

# (12) EUROPEAN PATENT SPECIFICATION

(45) Date of publication and mention of the grant of the patent:
**15.11.2017 Bulletin 2017/46**

(21) Application number: **10818068.8**

(22) Date of filing: **09.09.2010**

(51) Int Cl.:
***F16H 61/21*** *(2006.01)*
***F16D 48/02*** *(2006.01)*
***F16H 61/14*** *(2006.01)*
***B60W 50/08*** *(2012.01)*
*B60W 10/02* *(2006.01)*

(86) International application number:
**PCT/JP2010/065548**

(87) International publication number:
**WO 2012/032639 (15.03.2012 Gazette 2012/11)**

## (54) CONTROL UNIT FOR TRANSMISSION

STEUEREINHEIT FÜR EIN GETRIEBE

UNITÉ DE COMMANDE POUR TRANSMISSION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**17.07.2013 Bulletin 2013/29**

(73) Proprietor: **TOYOTA JIDOSHA KABUSHIKI KAISHA**
**Toyota-shi, Aichi-ken, 471-8571 (JP)**

(72) Inventors:
- **MATSUNAGA, Hitoshi**
**Toyota-shi, Aichi-ken, 471-8571 (JP)**
- **OKUMURA, Kazuya**
**Toyota-shi, Aichi-ken, 471-8571 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**DE-A1- 10 223 467**
**JP-A- 2003 083 441**
**JP-A- 2003 322 249**
**JP-A- 2008 180 260**
**JP-A- 2008 309 022**
**US-A- 6 106 433**
**US-A1- 2005 124 458**
**US-A1- 2010 204 883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 615 336 B1

## Description

Field

The present invention relates to a control device for a transmission mounted on a vehicle.

Background

Conventionally, there is well known a technology of controlling a lock-up clutch in a transmission in order to properly generate an engine brake force of the vehicle. For example, JP 2001-304003 A discloses a technology of surely engaging the lock-up clutch to secure the engine brake force in any vehicle state (for example, in the state in which a throttle is slightly depressed in a steeply downward slope). In the technology disclosed in JP 2001-304003 A, when a difference between an engine rotating speed and an input shaft rotating speed of the transmission exceeds a predetermined range, because an actual coast running state of the vehicle can accurately be detected from the difference, the engine rotating speed is enhanced such that the difference is decreased in engaging the lock-up clutch.

JP 2005-313831 A discloses a technology of suppressing generation of a fluctuation in deceleration, which is unintended by a driver, when fastening of the lock-up clutch is released after fuel supply to an engine is stopped. In the technology disclosed in JP 2005-313831 A, until the fastening of the lock-up clutch is released after the fuel supply to the engine is stopped, a throttle valve opening is increased in addition to an accelerator operation of the driver, a reducing amount of engine brake torque corresponding to the increase in the throttle valve opening is made up for by a braking device to reduce the engine brake torque transmitted from the lock-up clutch to a drive system. The control is ended until the fuel supply to the engine is resumed after the fastening of the lock-up clutch is released.

JP 2001-056050 A discloses a technology in which, as a degree of vehicle deceleration associated with a brake operation is determined to be large, a lock-up release vehicle speed is set onto a low-speed side to delay operation release timing of the lock-up clutch mechanism during the deceleration. JP H10-073160 A discloses a technology in which, in the case where the driver has a driving preference of an increasing driving force, the lock-up clutch is maintained in the release state, and slip control of the lock-up clutch is permitted during running of downward slope, thereby increasing the engine brake

From US 2010/0204883 A1, an operation assisting system, which is capable of adjusting an operational feeling to operate an operating device to an actual resultant physical quantity, thereby mitigating uncomfortable feeling of the driver, is known. The operation assisting system includes a drive unit for generating a power for driving a vehicle, an operating device for controlling the power transmitted from the drive unit to a wheel of the vehicle, a reaction force generating mechanism for generating a reaction force against the operated operating device, and a reaction force controller for controlling the reaction force generated by the reaction force generating mechanism exponentially, with respect to a change in a force applied to the operating device to operate the operating device, a change in an operating amount of the operating device, or a velocity to operate the operating device.

Summary

Technical Problem

However, in the technology of JP 2001-304003 A, although the desired engine brake force can be generated, the fuel economy is possibly degraded because the fuel consumption is not considered. In the technology of JP 2005-313831 A, the fluctuation in deceleration, which is unintended by the driver, can be suppressed. However, the fuel economy is degraded because the throttle valve opening is increased. When the technologies are applied as control during economy running, the fuel economy is inevitably degraded even if the fluctuation in deceleration, which is unintended by the driver, can be suppressed by the desired engine brake force.

In view of the foregoing, an object of the present invention is to provide a control device for a transmission that can reduce the fuel consumption while the vehicle deceleration is changed within a range where the driver does not feel discomfort.

Solution to Problem

In order to achieve the above mentioned object, a control device for a transmission, according to the present invention, that includes: a lock-up mechanism that is interposed between an engine and the transmission; and an input clutch capable of connecting and disconnecting a torque transmission between the engine and a drive wheel, wherein an amount of vehicle deceleration change, which can be sensed by a driver, is obtained based on vehicle deceleration at a time when the input clutch is not released and a previously set reference value, a target amount of the vehicle deceleration change, which cannot be sensed by the driver, is set based on the amount of the vehicle deceleration change, and an engaging force of the lock-up mechanism and/or the input clutch is controlled to reduce the vehicle deceleration such that the target amount of the vehicle deceleration change is obtained.

Here, it is desirable that the amount of the vehicle deceleration change is obtained according to a Weber's law.

Further, it is desirable that the reference value is a Weber ratio of the Weber's law.

Further, it is desirable that the engaging force is prohibited from being controlled during sudden braking of the vehicle or during control for an increase of an engine brake force.

Further, it is desirable that a gradient of a change in the engaging force is changed in response to a gradient of the change in the vehicle deceleration.

Further, it is desirable that the gradient of the change in the engaging force is increased with an increasing gradient of the change in the vehicle deceleration.

Further, it is desirable that a clutch control amount is corrected based on a difference between target vehicle deceleration and currently actual vehicle deceleration, when the lock-up mechanism or the input clutch generates the engaging force in response to the clutch control amount.

Further, it is desirable that a gradient of a change in a clutch control amount is corrected based on a difference between a target gradient of the change in the vehicle deceleration and a currently actual gradient of the change in the vehicle deceleration, when the lock-up mechanism or the input clutch generates the engaging force in response to the clutch control amount.

## Advantageous Effects of Invention

In the control device for a transmission of the present invention, the amount of vehicle deceleration change, which can be sensed by the driver, is obtained, and the target amount of vehicle deceleration change, which cannot be sensed by the driver, is set based on the amount of vehicle deceleration change. The control device controls the engaging force of the lock-up mechanism and/or the input clutch to reduce the vehicle deceleration such that the target amount of vehicle deceleration change is obtained. Accordingly, the control device can reduce the vehicle deceleration within the range where the driver does not feel discomfort. The control device can lengthen the inertia running time during the economy running in association with the reduction of the deceleration, so that the fuel consumption reducing effect of the economy running can be enhanced.

## Brief Description of Drawings

FIG. 1 is a view illustrating an example of a control device for a transmission according to an embodiment of the present invention.

FIG. 2 is a flowchart explaining a control operation of the control device for a transmission of the embodiment of the present invention.

FIG. 3 is a timing chart associated with the control operation of the control device for a transmission of the embodiment of the present invention.

FIG. 4 is a timing chart associated with the control operation of the control device for a transmission of the embodiment of the present invention.

FIG. 5 is a view illustrating a change in deceleration of a vehicle when a gradient of a change in clutch engaging force is changed according to a gradient of a change in deceleration of the vehicle.

## Description of Embodiment

A control device for a transmission according to an embodiment of the present invention will be described in detail with reference to the drawings. However, the present invention is not limited to the embodiment.

### [Embodiment]

A control device for a transmission according to an embodiment of the present invention will be described in detail with reference to FIG. 1 to FIG. 5.

The reference numeral 1 of FIG. 1 designates a control device for a transmission 10 in the embodiment. First, an example of the transmission 10 that is a control target of the control device 1 will be briefly described.

For example, the transmission 10 is a so-called automatic transmission and illustrated as a multiple automatic transmission including plural transmission gear stages (six forward stages and one backward stage) having different transmission gear ratios. The transmission 10 includes a torque converter 20 and a transmission body 30. The torque converter 20 transmits an output torque of an engine 50 as a power source to a gear on a transmission gear stage side. The transmission body 30 includes a gear group constituting each transmission gear stage.

The torque converter 20 is a fluid transmission device that includes a pump impeller 21, a turbine runner 22, and a stator 23. The pump impeller 21, the turbine runner 22, and the stator 23 are accommodated in a housing (not illustrated), and the housing is filled with a fluid (so-called ATF). An input shaft 11 of the transmission 10 is coupled to the pump impeller 21 so as to integrally rotate. A first torque transmission shaft 41 connected to first to fourth clutches C1 to C4, which are later described, is coupled to the turbine runner 22 so as to integrally rotate. The stator 23 is connected to the housing of the torque converter 20 via a one-way clutch 24. An output shaft 51 of the engine 50 is coupled to the input shaft 11 of the transmission 10.

A lock-up clutch 25 is provided in the torque converter 20 in order to integrally rotate the pump impeller 21 and the turbine runner 22. The lock-up clutch 25 includes a first engaging unit 25a that is coupled to the input shaft 11 so as to integrally rotate and a second engaging unit 25b that is coupled to the first torque transmission shaft 41 so as to integrally rotate. In a contact portion where the first engaging unit 25a and the second engaging unit 25b are press-contacted with each other, a friction member is provided in at least one of the first engaging unit 25a and the second engaging unit 25b.

The lock-up clutch 25 press-contacts or separates the first engaging unit 25a and the second engaging unit 25b to create a release state in which a torque transmission between the first engaging unit 25a and the second engaging unit 25b is disabled, a slip engaging state (semi-engaging state) in which the first engaging unit 25a and the second engaging unit 25b are engaged in a slip state, and a complete engaging state in which the first engaging unit 25a and the second engaging unit 25b are integrally rotated. In the case where the lock-up clutch 25 is controlled in the complete engaging state, since the pump impeller 21 and the turbine runner 22 are integrally rotated while directly connected, a torque can be transmitted between the input shaft 11 and the first torque transmission shaft 41 (in other words, the engine 50 and the transmission body 30) without loss. On the other hand, in the case where the lock-up clutch 25 is controlled in the release state or the slip engaging state, the torque transmission between the input shaft 11 and the first torque transmission shaft 41 is performed through a fluid between the pump impeller 21 and the turbine runner 22, thereby generating the torque transmission loss. In a transition period (that is, in the slip engaging state) between the release state and the complete engaging state, a press-contact force (engaging force) between the first engaging unit 25a and the second engaging unit 25b is gradually strengthened or weakened. At this point, with increasing engaging force, a slip amount is decreased to reduce the torque transmission loss.

The states of the lock-up clutch 25 can be created by an actuator 26 that is operated in response to a control command of the control device 1. An actuator that is operated by a fluid pressure such as hydraulic pressure or a motor-driven actuator can be cited as an example of the actuator 26 (in the embodiment, it is assumed that a hydraulic actuator is used as the actuator 26). The lock-up clutch 25 can adjust a clutch control amount (in the embodiment, clutch control hydraulic pressure Pcl1) of the actuator 26, and the lock-up clutch 25 can intentionally control the engaging force between the first engaging unit 25a and the second engaging unit 25b in response to the clutch control amount. That is, the lock-up clutch 25 can create the slip engaging state by the desired engaging force to adjust the torque transmission loss.

The transmission body 30 includes first to fourth clutches C1 to C4, first to third planetary gear trains 31 to 33 including sun gear and the like, second to fourth torque transmission shafts 42 to 44 that can perform the torque transmission between the first to fourth clutches C1 to C4 and the first to third planetary gear trains 31 to 33, and first to fourth brakes B1 to B4. In the transmission body 30, the control device 1 engages or releases predetermined clutch and brake in the first to fourth clutches C1 to C4 and the first to fourth brakes B1 to B4, thereby switching to the desired transmission gear stage.

The first clutch C1 is called as an input clutch, a forward clutch, or the like. Hereinafter the first clutch is referred to as the "input clutch". The input clutch C1 includes a first engaging unit C1a that is coupled to the first torque transmission shaft 41 so as to integrally rotate and a second engaging unit C1b that is coupled to the third torque transmission shaft 43 via a one-way clutch F0. In a contact portion where the first engaging unit C1a and the second engaging unit C1b are press-contacted with each other, a friction member is provided in at least one of the first engaging unit C1a and the second engaging unit C1b. The one-way clutch F0 prevents a sun gear of the second planetary gear train 32 and the third torque transmission shaft 43 from inversely rotating (rotation in an opposite direction to the rotation of the first torque transmission shaft 41). The third torque transmission shaft 43 is coupled to an output shaft 12 of the transmission 10 via the sun gear and a pinion gear of the third planetary gear train 33. The output shaft 12 is coupled to a power transmission unit 60 such as a differential, and the output shaft 12 is connected to drive wheels WL and WR via the power transmission unit 60.

Similarly to the lock-up clutch 25, the input clutch C1 can create the release state in which the torque transmission between the first engaging unit C1a and the second engaging unit C1b is disabled, the slip engaging state in which the first engaging unit C1a and the second engaging unit C1b are engaged in the slip state, and the complete engaging state in which the first engaging unit C1a and the second engaging unit C1b are integrally rotated. In the case where the input clutch C1 is controlled in the complete engaging state, the torque can be transmitted between the first torque transmission shaft 41 and the third torque transmission shaft 43 without loss. Accordingly, in this case, the torque transmission loss between the first torque transmission shaft 41 and the output shaft 12 can be suppressed, so that the torque transmission loss between the engine 50 and the drive wheels WL and WR can be suppressed. On the other hand, in the slip engaging state, the torque transmission loss is generated between the first torque transmission shaft 41 and the third torque transmission shaft 43, whereby the torque transmission loss is also generated between the engine 50 and the drive wheels WL and WR. At this point, with increasing engaging force of the input clutch C1, the slip amount is decreased to reduce the torque transmission loss.

The states of the input clutch C1 can be created by an actuator 39 that is operated in response to the control command of the control device 1. An actuator that is operated by a fluid pressure such as hydraulic pressure or a motor-driven actuator can be cited as an example of the actuator 39 (in the embodiment, it is assumed that a hydraulic actuator is used as the actuator 39). The input clutch C1 can adjust a clutch control amount (in the embodiment, clutch control hydraulic pressure Pcl2) of the actuator 39, and the input clutch C1 can intentionally control the engaging force between the first engaging unit C1a and the second engaging unit C1b in response to the clutch control amount. That is, the input clutch C1 can create the slip engaging state by the desired engaging force to adjust the torque transmission loss.

A so-called economy running function is provided in the vehicle, so that the engine 50 can stop and restart during running. In the engine 50 in the stopping state during the economy running, fuel supply is stopped in order to reduce fuel consumption.

In the vehicle during the economy running, a so-called engine brake force (engine brake torque) is generated by mechanically engaging the stopped engine 50 and the drive wheels WL and WR. In the vehicle during the economy running, a inertia running time is shortened because deceleration is increased with increasing engine brake force. For example, when the lock-up clutch 25 or the input clutch C1 is in the complete engaging state, since the torque transmission loss between the engine 50 and the drive wheels WL and WR is suppressed, the deceleration is increased by the large engine brake force to shorten the inertia running time. When the lock-up clutch 25 or the input clutch C1 is in the slip engaging state, since the torque transmission loss between the engine 50 and the drive wheels WL and WR is increased compared with the complete engaging state, the engine brake force is reduced to decrease the deceleration, and the inertia running time can be lengthened. When the input clutch C1 is in the release state, since the mechanical engagement between the engine 50 and the drive wheels WL and WR is eliminated irrespective of the state of the lock-up clutch 25, the engine brake force is not generated, and the inertia running time becomes the longest.

At this point, because the stopping state of the engine 50 is shortened for the short inertia running time, a fuel consumption reducing effect by the economy running is lowered. The vehicle deceleration is increased with decreasing the inertia running time, and a vehicle speed is reduced in a short time. Therefore, for example, in the case where the vehicle speed is more reduced than that the driver thought, a large amount of fuel is consumed to accelerate the vehicle again rather than the case of the long inertia running time. Therefore, preferably the inertia running time is lengthened during the economy running in order to enhance the fuel consumption reducing effect. In order to lengthen the inertia running time, as described above, it is necessary that the engaging force of the lock-up clutch 25 or input clutch C1 be weakened such that the engine brake force is decreased, and it is necessary that the input clutch C1 be finally in the release state. In the vehicle, the engine 50 is continuously stopped for a long time by lengthening the inertia running time, so that the fuel consumption reducing effect can be enhanced. However, when the engaging force of the lock-up clutch 25 or the like is weakened, since the vehicle deceleration is reduced compared with the complete engaging state, possibly the driver feels discomfort. Thus, while desirably the inertia running time is lengthened by reducing the deceleration from the standpoint of the fuel economy, it is necessary that a decrease margin of the deceleration be suppressed such that the driver does not feel discomfort, which meets the driver's intention, from the standpoint of drivability.

In the embodiment, the vehicle deceleration is decreased to an extent that the driver does not feel discomfort, whereby the inertia running time is lengthened during the economy running to achieve the reduction of the fuel consumption.

The vehicle deceleration during the conventional economy running is set to a reference. When the deceleration is reduced smaller than the reference deceleration, the driver hardly feels discomfort for a small deceleration reducing amount, while the driver feels discomfort for a large deceleration reducing amount. Hereinafter the reference deceleration is referred to as "reference deceleration Gx". At this point, when the lock-up clutch 25 or the input clutch C1 is not released during the economy running (that is, in the complete engaging state), the vehicle deceleration is set to the reference deceleration Gx. The reference deceleration Gx includes all kinds of deceleration such as deceleration $Gx_{EB}$ corresponding to the engine brake force, deceleration by a slope of a road surface, and deceleration by a braking force of a braking device.

In order to obtain the maximum fuel consumption reducing effect with the vehicle deceleration in which the driver does not feel discomfort, it is necessary to learn how much the deceleration is reduced with respect to the reference deceleration Gx. A so-called Weber's law, in which a minimum stimulus difference (discriminative threshold) that can be sensuously discriminated by a human is proportional to intensity of a reference stimulus that becomes a reference, is utilized in the embodiment. The reference deceleration Gx corresponds to the reference stimulus when the embodiment is applied to the Weber's law. In the embodiment, a minimum amount of deceleration change ΔGx in which the driver senses the deceleration change corresponds to the discriminative threshold. Assuming that "C" is a Weber ratio that is a constant value, a relationship expressed by the following equation (1) holds in the embodiment.

$$\Delta Gx / Gx = C \quad (1)$$

According to the Weber's law, minimum amount of deceleration change ΔGx in which the driver senses the deceleration change can be obtained from the reference deceleration Gx and the Weber ratio C based on the following equation (2) that is a modification of the equation (1). The amount of deceleration change ΔGx is proportional to the reference deceleration Gx, and the amount of deceleration change ΔGx is increased with increasing reference deceleration Gx. The Weber ratio C is a reference value that is used to compute the amount of deceleration change ΔGx, and it is necessary to set the amount of deceleration change ΔGx by an experiment or a simulation.

$$\Delta Gx = Gx \times C \quad (2)$$

In order to reduce the fuel consumption without providing the sense of discomfort to the driver who senses the change in the vehicle deceleration, it is necessary that a target amount of deceleration change (target deceleration reducing amount) $\Delta Gx_{tgt}$ be set from deceleration reducing amounts that are smaller than the amount of deceleration change ΔGx, and it is necessary that the deceleration is reduced by the target amount of deceleration change $\Delta Gx_{tgt}$. Particularly, in order to obtain the maximum fuel consumption reducing effect, it is necessary that the maximum value settable in the deceleration reducing amounts smaller than the amount of deceleration change ΔGx be set to target amount of deceleration change $\Delta Gx_{tgt}$.

The vehicle deceleration can be adjusted by increasing and decreasing the engine brake force during the economy running. As described above, the engine brake force can be changed in response to the state of the lock-up clutch 25 or input clutch C1. That is, during the economy running, the engaging force of the lock-up clutch 25 and/or input clutch C1 is decreased, and the engine brake force is decreased by the decrease in the engaging force, which allows the vehicle deceleration to be reduced by the decrease in the engine brake force. Therefore, in the embodiment, an engine brake force reducing amount in which the target amount of deceleration change $\Delta Gx_{tgt}$ can be achieved is obtained, and the engaging force reducing amount of the lock-up clutch 25 and/or the input clutch C1 is computed in order to achieve the engine brake force reducing amount. Since the minimum amount of deceleration change ΔGx in which the driver senses the deceleration change is increased with increasing reference deceleration Gx (equation (2)), the engaging force reducing amount is also increased. The control device 1 obtains the clutch control hydraulic pressure Pcl1 of the lock-up clutch 25 and/or the clutch control hydraulic pressure Pcl2 of the input clutch C1 in order to achieve the engaging force reducing amount, and the control device 1 controls the lock-up clutch 25 and input clutch C1, which are the control targets.

The description will specifically be made with reference to a flowchart of FIG. 2.

The control device 1 determines whether the vehicle is in the economy running state (whether a determination of economy running performance is made) (Step ST1). When the vehicle is not in the economy running state, the control device 1 repeats the determination in Step ST1.

On the other hand, when the vehicle is in the economy running state, the control device 1 calculates the reference deceleration Gx when both the lock-up clutch 25 and the input clutch C1 are in the complete engaging state (Step ST2).

In Step ST2, when the lock-up clutch 25 and the input clutch C1 are actually in the complete engaging state, the actual deceleration is measured or computed at that time, and the actual deceleration may be used as the reference deceleration Gx. At this point, a measurement result of vehicle front-back acceleration detected by a front-back acceleration sensor 71 may be used as the reference deceleration Gx, or the reference deceleration Gx may be computed based on a change in the vehicle speed detected by a vehicle speed sensor 72. The reference deceleration Gx may be computed from a change in a rotating speed of each of various rotating shafts from the engine 50 to the drive wheels WL and WR, for example, a change in an engine rotating speed detected by a crank angle sensor 73 and a change in the rotating speed of the input shaft 11 or the output shaft 12 of the transmission 10. The case, where a determination of economy running start is made in the state in which an accelerator opening detected by an accelerator opening sensor 74 already becomes zero while the fuel supply to the engine 50 is already stopped (that is, the deceleration is already started), can be cited as an specific example in which the reference deceleration Gx is applied based on the measured value (FIG. 3).

Immediately after the accelerator opening becomes zero (FIG. 4), possibly the vehicle does not become the deceleration state due to inertia of the vehicle or residual intake air of the engine 50. Therefore, in such cases, the reference deceleration Gx at the time both the lock-up clutch 25 and the input clutch C1 are in the complete engaging state is estimated in Step ST2. For example, the engine brake force at the time both the lock-up clutch 25 and the input clutch C1 are in the complete engaging state is estimated based on a gear ratio from the engine 50 to the drive wheels WL and WR, which is determined from the current vehicle speed, the engine rotating speed, transmission gear ratio of the transmission 10, and the like. The deceleration $Gx_{EB}$ corresponding to the estimated engine brake force is estimated, and the reference deceleration Gx is estimated while deceleration of another factor such as the slope of the road surface is added to the deceleration $Gx_{EB}$.

The control device 1 compares the reference deceleration Gx to a predetermined threshold value $Gx_{min}$ (Step ST3). The comparison determination in Step ST3 is made in order to determine whether the deceleration $Gx_{EB}$ corresponding to the engine brake force is sufficiently smaller than the reference deceleration Gx. When the deceleration $Gx_{EB}$ is sufficiently smaller than the reference deceleration Gx, the driver does not feel discomfort even if the deceleration $Gx_{EB}$ is not generated in the vehicle. On the other hand, when the deceleration $Gx_{EB}$ is relatively larger than the reference deceleration Gx, the driver feels discomfort unless the deceleration $Gx_{EB}$ is generated in the vehicle. For example, in a threshold value $Gx_{min}$, the deceleration except the deceleration $Gx_{EB}$ is added to deceleration that is too small to provide the sense of discomfort to the driver even if the deceleration is added to the deceleration except the deceleration $Gx_{EB}$. Therefore, when the deceleration except the deceleration $Gx_{EB}$ changes by a running condition such as the vehicle speed, the threshold value $Gx_{min}$ may be set in response to the running condition.

In the case where the reference deceleration Gx that is smaller than the threshold value $Gx_{min}$, because the deceleration $Gx_{EB}$ corresponding to the engine brake force is sufficiently smaller than the reference deceleration Gx at that time, the control device 1 determines that the driver does not feel discomfort even if the generation of the deceleration $Gx_{EB}$ is stopped, and the control device 1 sets the clutch control hydraulic pressure Pcl2 to zero (Step ST4). Then the control device 1 controls the input clutch C1 (Step ST5). Therefore, in the vehicle, the input clutch C1 becomes the release state, and the engine brake force does not work. Accordingly, during the economy running, the control device 1 can lengthen the inertia running time more than that of the time the input clutch C1 is engaged, which allows the fuel consumption to be reduced. At this point, the driver does not feel discomfort although the deceleration $Gx_{EB}$ corresponding to the engine brake force is not generated. In Steps ST4 and ST5, clutch control hydraulic pressure Pcl1 of the lock-up clutch 25 may also be set to zero, whereby electric power consumption necessary to generate the clutch control hydraulic pressure Pcl1 can be reduced to contribute to the improvement of the fuel economy.

On the other hand, in the case where the reference deceleration Gx is larger than the threshold value $Gx_{min}$, the driver who senses the reduction of the deceleration possibly feels discomfort when the generation of the deceleration $Gx_{EB}$ corresponding to the engine brake force is completely stopped at that time. Therefore, the control device 1 suppresses the reducing amount of the deceleration $Gx_{EB}$ to an extent that the driver does not feel discomfort.

The reference deceleration Gx is substituted for the equation (2) to obtain the minimum amount of deceleration change (deceleration reducing amount) $\Delta Gx$ in which the driver senses the deceleration change (Step ST6). The target amount of deceleration change (target deceleration reducing amount) $\Delta Gx_{tgt}$ ($<\Delta Gx$) is calculated based on the amount of deceleration change $\Delta Gx$ (Step ST7). Then the control device 1 obtains the engine brake force reducing amount (engine brake force reducing torque $\Delta T_{EB}$ ($\Delta Gx_{tgt}$)) corresponding to the target amount of deceleration change $\Delta Gx_{tgt}$ (Step ST8).

During the economy running, in the case where the mechanical engagement is established between the engine 50 and the drive wheels WL and WR, an engine rotating speed lower limit $Ne_{min}$ necessary to restart the engine 50 is set because the engine rotating speed Ne is reduced in association with the mechanical engagement performance. During the economy running, the engine 50 is restarted when the engine rotating speed Ne is smaller than the engine rotating speed lower limit $Ne_{min}$. The engine rotating speed lower limit $Ne_{min}$ is previously set in the economy running function in order to prevent the engine 50 from resonating due to the excessive reduction of the engine rotating speed. Therefore, when the engine rotating speed $Ne_{tag}$ ($\Delta Gx_{tgt}$) is equal to or smaller than the engine rotating speed lower limit $Ne_{min}$ in reducing the engaging force in response to the target amount of deceleration change $\Delta Gx_{tgt}$, the input clutch C1 can be controlled in the release state to avoid the restart of the engine 50, and the economy running can be continued. The control device 1 calculates the engine rotating speed $Ne_{tag}$ ($\Delta Gx_{tgt}$) in reducing the engaging force (Step ST9). The control device 1 compares the engine rotating speed $Ne_{tag}$ ($\Delta Gx_{tgt}$) in reducing the engaging force to the engine rotating speed lower limit $Ne_{min}$ (Step ST10).

When the engine rotating speed $Ne_{tag}$ ($\Delta Gx_{tgt}$) is equal to or smaller than the engine rotating speed lower limit $Ne_{min}$, the flow goes to Steps ST4 and ST5, the control device 1 sets the clutch control hydraulic pressure Pcl2 to zero to control the input clutch C1 in the release state. Therefore, in the vehicle, since the economy running can be continued, the fuel consumption reducing effect can be enhanced. At this point, although the driver possibly feels discomfort in association with the reduction of the deceleration, since drivability degradation caused by the resonation of the engine 50 is not more preferable, the input clutch C1 is set to the release state. In the case of the large reduction of the deceleration, sometimes the engine 50 may be restarted even if the fuel consumption reducing effect is not obtained. In such cases, the input clutch C1 is not set to the release state, but the engine 50 may be restarted.

On the other hand, in the case where the engine rotating speed $Ne_{tag}$ ($\Delta Gx_{tgt}$) is larger than engine rotating speed lower limit $Ne_{min}$, the control device 1 calculates a clutch control hydraulic pressure Pcl1 ($\Delta T_{EB}$) and/or a clutch control hydraulic pressure Pcl2 ($\Delta T_{EB}$) in response to the engine brake force reducing torque $\Delta T_{EB}$ ($\Delta Gx_{tgt}$) (Step ST11), and the control device 1 controls the lock-up clutch 25 and/or the input clutch C1 (Step ST12). As a result, in the lock-up clutch 25 or input clutch C1 that becomes the control target, the clutch control hydraulic pressures Pcl1 and Pcl2 are lowered to decrease the engaging force. Accordingly, in the vehicle, the engine brake force is decreased by the engine brake force reducing torque $\Delta T_{EB}$ ($\Delta Gx_{tgt}$), and the deceleration is reduced by the target amount of deceleration change $\Delta Gx_{tgt}$. Therefore, the control device 1 can lengthen the inertia running time during the economy running within a range where the driver does not feel discomfort compared with the case where the clutch control is not interposed. In such cases, since the deceleration reducing amount is suppressed to the level of the target amount of deceleration change $\Delta Gx_{tgt}$, the driver does not sense the reduction of the vehicle deceleration, and the driver does not feel discomfort.

In Steps ST11 and ST12, the control device 1 determines whether the engine brake force reducing torque $\Delta T_{EB}$ ($\Delta Gx_{tgt}$) can be achieved by decreasing the engaging force of the input clutch C1. When the engine brake force reducing torque $\Delta T_{EB}$ ($\Delta Gx_{tgt}$) can be achieved by decreasing the engaging force of the input clutch C1, only the clutch control hydraulic pressure Pcl2 ($\Delta T_{EB}$) may be obtained to control only the input clutch C1. Meanwhile, when the engine brake force reducing torque $\Delta T_{EB}$ ($\Delta Gx_{tgt}$) cannot be achieved only by decreasing the engaging force of the input clutch C1, in order to impose the residual reducing amount on the lock-up clutch 25, the clutch control hydraulic pressure Pcl1 ($\Delta T_{EB}$) may also be obtained to control the lock-up clutch 25 and the input clutch C1.

The case of FIG. 3 will be described by way of example. When the determination of economy running start is made in the state in which the accelerator opening already becomes zero while the fuel supply to the engine 50 is already stopped (that is, the determination of the economy running performance is made), the clutch control hydraulic pressure Pcl2 is lowered to the set clutch control hydraulic pressure Pcl2 ($\Delta T_{EB}$) to decrease the engaging force of the input clutch C1. Therefore, since the engine brake force is decreased, the vehicle deceleration is reduced smaller than that of the case where the clutch control is not interposed. The reference deceleration Gx shown in FIG. 3 is equal to the vehicle deceleration at the time when the clutch control is not interposed (the complete engaging state is created between the lock-up clutch 25 and the input clutch C1).

The case of FIG. 4 will be described by way of example. When accelerator opening becomes zero during acceleration running or constant speed running, the economy running is started to stop the fuel supply to the engine 50. At the substantially same time, in the input clutch C1, the clutch control hydraulic pressure Pcl2 is lowered to the set clutch control hydraulic pressure Pcl2 ($\Delta T_{EB}$). Therefore, the vehicle deceleration is reduced smaller than that of the case where the clutch control is not interposed. The reference deceleration Gx shown in FIG. 4 is equal to the vehicle deceleration at the time when the clutch control is not interposed (the complete engaging state is created between the lock-up clutch 25 and the input clutch C1). At this point, since the reference deceleration Gx is an estimated value that is not actually generated, the minimum amount of deceleration change $\Delta Gx$ in which the driver senses the deceleration change is relatively larger than that of the case of FIG. 3 based on the measured value, and the target amount of deceleration change $\Delta Gx_{tgt}$ that is relatively larger than that of the case of FIG. 3 can be set. Accordingly, compared with the case of FIG. 3, the vehicle deceleration can be reduced to lengthen the inertia running time without providing the sense of discomfort to the driver, so that the fuel consumption reducing effect is enhanced.

When the input clutch C1 is not in the release state, the control device 1 changes the engaging force of the input clutch C1 without changing the state of the lock-up clutch 25 irrespective of the state of the lock-up clutch 25 (whether the lock-up clutch 25 is engaged or released), which allows the engine brake force to be adjusted. When the lock-up clutch 25 and the input clutch C1 are not in the release state, the control device 1 can adjust the engine brake force by changing one of or both the engaging forces of the lock-up clutch 25 and input clutch C1. It is assumed that the reference deceleration Gx used in the adjustment is the vehicle deceleration at the time when the input clutch C1 that can generate the engine brake force is engaged. For example, unless both the lock-up clutch 25 and the input clutch C1 are released (when the lock-up clutch 25 and the input clutch C1 are in the complete engaging state or the slip engaging state), the vehicle deceleration at that time is set to the reference deceleration Gx as described above in the example. On the other hand, sometimes the lock-up clutch 25 is in the release state, the vehicle deceleration at the time when the input clutch C1 is not released (the input clutch C1 is in the complete engaging state or the slip engaging state) may be set to the reference deceleration Gx. The similar effect can also be obtained in this way.

The driver expects the generation of the large vehicle deceleration larger than that of the usual braking operation when performing the sudden braking operation of the brake pedal to the braking device. However, when the engine brake force is changed at this point, the vehicle braking force is changed to possibly degrade controllability of the driver to the braking device. Particularly, when the clutch control is performed during the sudden braking operation, the engine brake force is decreased by the decrease of the engaging force of the lock-up clutch 25 or input clutch C1, and the vehicle braking force is decreased smaller than the level of the vehicle braking force that the driver desires by the sudden braking operation, whereby the driver feels discomfort. Therefore, the control device 1 is prohibited from performing the clutch control when the sudden braking is determined to be operated. As a result, the clutch control is not performed when the clutch control is not performed yet, and the clutch control is stopped when the clutch control is currently performed. Thus, since the decrease in the engine brake force associated with the clutch control is eliminated, the vehicle braking force desired by the driver is generated even if the driver does not adjust the amount of braking operation. Therefore, the degradation of the controllability of the driver to the braking device can be suppressed to prevent the sense of discomfort of the driver.

For example, the determination whether the sudden braking is operated may be made by utilizing a master cylinder pressure detected by a master cylinder pressure sensor 75 of the braking device, the vehicle front-back acceleration, the vehicle speed, and the rotating speeds of various rotating shafts from the engine 50 to the drive wheels WL and WR. When the determination of the sudden braking is made, the master cylinder pressure is largely increased, a negative value of the vehicle front-back acceleration is largely increased (when a positive value is detected during the acceleration while the negative value is detected during the deceleration), and the vehicle speed or the rotating speeds of various rotating shafts are largely reduced.

Engine brake force increase control (drive assist control) in which the engine brake force is increased by the enhancement of the engine rotating speed is well known as one of control functions of the control device 1. Specifically, examples of the drive assist control include hill-climbing and hill-running-down control to increase the engine brake force during the running of the slope, sudden braking control to increase the engine brake force in order to avoid an obstacle in front, and accelerator sudden close control to increase the engine brake force in response to a deceleration request to suddenly close the accelerator pedal from the driver. The increase in the vehicle deceleration is required by increasing the intentional engine brake force during the performance of the drive assist control. For example, during the running of the downward slope, the transmission gear ratio of the transmission 10 is increased to achieve the increase in the engine brake force in order to suppress the enhancement of the vehicle speed in an accelerator-off state. However, when the vehicle speed is enhanced even if the transmission gear ratio is increased, the hill-climbing and hill-running-down control is performed to further increase the engine brake force, thereby suppressing the enhancement of the vehicle speed. In the vehicle to which the drive assist control is applied, when the clutch control is performed during the performance of the drive assist control, since the engine brake force is decreased by the decrease in the engaging force of the lock-up clutch 25 or input clutch C1 even if the increase in the engine brake force is required, the engine brake force necessary for the drive assist control is not obtained. Therefore, the control device 1 is prohibited from performing the clutch control when the drive assist control is determined to be currently performed or to be going to be performed. Accordingly, since the decrease in the engine brake force associate with the clutch control is eliminated during the performance of the drive assist control, the engine brake force necessary for the drive assist control can be generated in the vehicle.

In the vehicle, sometimes a variation in initial quality or time degradation is generated each component. In such cases, a deviation is generated between the target amount of deceleration change $\Delta Gx_{tgt}$ and the amount of deceleration change that is actually output based on the target amount of deceleration change $\Delta Gx_{tgt}$, in other words, the deviation is generated between the target deceleration corresponding to the target amount of deceleration change $\Delta Gx_{tgt}$ and the actual deceleration, and the vehicle deceleration cannot be changed to the desired level. For example, in the case where a variation in friction coefficient exists in the friction member of the lock-up clutch 25 or input clutch C1, the desired engaging force is not obtained at the clutch control hydraulic pressures Pcl1 and Pcl2 corresponding to the target amount of deceleration change $\Delta Gx_{tgt}$, but the actual amount of deceleration change becomes larger or smaller than the target amount of deceleration change $\Delta Gx_{tgt}$. Therefore, the control device 1 compares the target vehicle deceleration corresponding to the target amount of deceleration change $\Delta Gx_{tgt}$ to the currently actual vehicle deceleration. For example, the control device 1 compares the target vehicle deceleration in the clutch control before a predetermined period to the currently actual vehicle deceleration. The reason the target vehicle deceleration before the predetermined period is used is that the engaging force is actually controlled from a control command to the hydraulic actuators 26 and 39 and the response delay is generated until the control command emerges as the actual deceleration of the vehicle. The predetermined period is previously set based on the experiment or the like. The control device 1 obtains correction values of the clutch control hydraulic pressures Pcl1 and Pcl2 corresponding to the difference between the target vehicle deceleration and the actual vehicle deceleration, and the control device 1 controls the lock-up clutch 25 and the input clutch C1 with the clutch control hydraulic pressures Pcl1 and Pcl2 that are corrected using the correction values. The correction values may be added to the clutch control hydraulic pressures Pcl1 and Pcl2 of the next control period. The vehicle deceleration can be reduced to the desired level of the vehicle deceleration by performing the feedback control or learning control.

As described above, in the actual vehicle the vehicle deceleration is influenced by factors except the engine brake force. Particularly, in performing the feedback control or the learning control, the control possibly diverges when the vehicle deceleration relating to the factors (such as the slope of the road surface and the braking force of the braking device) different from the variation in initial quality of the component largely changes. Therefore, when the vehicle deceleration relating to the slope of the road surface and the braking force of the braking device largely changes, desirably the feedback control or the learning control is prohibited from being performed to stabilize the control. At this point, the slope of the road surface can be obtained by utilizing map information of a car navigation system or the information detected by the front-back acceleration sensor 71. The amount of vehicle deceleration change corresponding to the amount of engine brake force change can be obtained based on the vehicle deceleration in which the acceleration and deceleration relating to the slope of the road surface or the deceleration relating to the braking force of the braking device is excluded.

In the clutch control, a gradient of the change in engaging force of the lock-up clutch 25 or input clutch C1 may be changed in response to a gradient of the vehicle deceleration change (amount of deceleration change $\Delta Gx_t$ per unit time). For example, it is assumed that "$\Delta Gx_{jd}$" is a maximum amount of acceleration change per unit time, which cannot be sensed by the driver, while the vehicle deceleration change is zero. In the case where the minimum amount of deceleration change $\Delta Gx$ in which the driver senses the deceleration change is larger than the maximum amount of acceleration change $\Delta Gx_{jd}$ per unit time, the vehicle deceleration can be reduced only by the maximum amount of acceleration change $\Delta Gx_{jd}$ per unit time, and the reducing effect is insufficiently obtained. However, the Weber's law can also be applied to the amount of deceleration change $\Delta Gx_t$ per unit time. At this point, the amount of deceleration change $\Delta Gx_t$ per unit time corresponds to the reference stimulus. On the other hand, the minimum amount of deceleration change $\Delta Gx_{td}$ per unit time, which can be sensed by the driver, corresponds to the discriminative threshold value. Accordingly, assuming that "C1" is a Weber ratio that is a constant value, the following equation (3) holds. That is, when the vehicle deceleration change is zero, the minimum amount of deceleration change $\Delta Gx_{td}$ per unit time, which can be sensed by the driver, becomes the maximum amount of acceleration change $\Delta Gx_{jd}$ per unit time.

$$\Delta Gx_{td} \;/\; \Delta Gx_t = C1 \qquad (3)$$

Because "$\Delta Gx_t = \Delta Gx_{jd}$" holds in the next control period, the minimum amount of deceleration change $\Delta Gx_{td}$ per unit time, which can be sensed by the driver, becomes smaller than the maximum amount of acceleration change $\Delta Gx_{jd}$ per unit time derived from the Weber's law, and at least the amount of acceleration change corresponding to the maximum amount of acceleration change $\Delta Gx_{jd}$ per unit time can be provided to the vehicle. The control device 1 compares the minimum amount of deceleration change $\Delta Gx_{td}$ per unit time calculated like this way to the maximum amount of acceleration change $\Delta Gx_{jd}$ per unit time. In the case of "$\Delta Gx_{td} < \Delta Gx_{jd}$", the maximum amount of acceleration change $\Delta GX_{jd}$ per unit time is set to the amount of acceleration change. In the case of "$\Delta Gx_{td} \geq \Delta Gx_{jd}$", the minimum amount of deceleration change $\Delta Gx_{td}$ per unit time is set to the amount of acceleration change. Therefore, compared with the constant minimum amount of deceleration change $\Delta Gx_{td}$ per unit time, the vehicle deceleration can rapidly be reduced without providing the sense of discomfort to the driver.

Therefore, the following thought holds. Assuming that n (= 1, 2, 3, ...) is a control period from the beginning of the clutch control, the following equation (4) holds for the minimum amount of deceleration change $\Delta Gx$ in which the driver senses the deceleration change, and the following equation (5) holds for the minimum amount of deceleration change $\Delta Gx_{td}$ per unit time in which the driver senses the deceleration change.

$$\Delta Gx_n = Gx_0 \times C \times (1-C)^{(n-1)} \qquad (4)$$

$$\Delta Gx_{tdn} = Gx_{t0} \times C1 \times (1-C1)^{(n-1)} \qquad (5)$$

Accordingly, the target amount of deceleration change $\Delta Gx_{tgt}$ is set as follows. In the case of "$\Delta Gx_n > \Delta Gx_{tdn}$", "$\Delta Gx_{tgt} = \Delta Gx_{tdn}$" is obtained. In the case of "$\Delta Gx_n \leq \Delta Gx_{tdn}$", "$\Delta Gx_{tgt} = \Delta Gx_n$" is obtained. Therefore, the vehicle deceleration can be reduced more rapidly compared with the case in which the amount of acceleration change is set to the constant maximum amount of acceleration change $\Delta Gx_{jd}$ per unit time (that is, constant gradient of the change) (FIG. 5). Further, in the case where the vehicle deceleration is reduced by the factors except the clutch control, the larger minimum amount of deceleration change $\Delta Gx_{tdn}$ per unit time can be used by setting the target amount of deceleration change $\Delta Gx_{tgt}$ in this way, that is, by changing the gradient of the change in engaging force of the lock-up clutch 25 or input clutch C1 in response to the gradient of the vehicle deceleration change, and the fuel consumption reducing effect can be improved in associated with the reduction of the deceleration. The gradient of the engaging force change is increased with increasing gradient of the vehicle deceleration change. Therefore, the optimum gradient can be obtained in order to reduce the vehicle deceleration.

At this point, the amount of deceleration change $\Delta Gx_t$ per unit time can be obtained from the current vehicle acceleration detected by the front-back acceleration sensor 71 or the current vehicle acceleration that is calculated based on the vehicle speed or the rotating speeds of various rotating shafts from the engine 50 to the drive wheels WL and WR. In the initial clutch control, using the current gradient of the vehicle deceleration change, the target amount of deceleration change $\Delta Gx_{tgt}$ in the previous control period may be set to the amount of deceleration change $\Delta Gx_t$ per unit time from the next control period.

In the case where the vehicle deceleration is not started like immediately after the accelerator opening becomes zero, the target amount of deceleration change $\Delta Gx_{tgt}$ of the initial clutch control can be obtained by setting the difference between the reference deceleration Gx estimated from the vehicle speed or engine rotating speed and the like and the current vehicle acceleration to the amount of deceleration change $\Delta Gx_t$ per unit time. The gradient at the time when the current vehicle acceleration is reduced to the reference deceleration Gx is previously set by the experiment or the like, which allows the target amount of deceleration change $\Delta Gx_{tgt}$ to be obtained. It is believed that the gradient is relatively larger than that of the acceleration change at the time when the clutch control is not interposed, so that the large target amount of deceleration change $\Delta Gx_{tgt}$ can be set at the initial clutch control to early reduce the vehicle deceleration.

The feedback control and the learning control can be performed even in the control to change the gradient of the engaging force change in response to the gradient of the deceleration change. That is, the correction values of the gradients of the changes in the clutch control hydraulic pressures Pcl1 and Pcl2 are obtained corresponding to the difference between the target gradient of the deceleration change and the currently actual gradient of the deceleration change, and the lock-up clutch 25 or the input clutch C1 is controlled with the gradients of the changes in the clutch control hydraulic pressures Pcl1 and Pcl2 corrected by the correction values. The feedback control is performed when the correction values are used in the control period at the time of computing the correction values, and the learning control is performed when the correction values are used in the next control period. The vehicle can be decelerated with the desired gradient of the deceleration change by performing the feedback control or the learning control. At this point, the actual gradient of the deceleration change can be obtained by differentiating the current vehicle deceleration with respect to time. As for the target gradient of the deceleration change, the target value before the predetermined period is used due to the existence of the response delay.

## Industrial Applicability

As described above, the control device for a transmission of the present invention is usefully applied to the technology in which the fuel consumption is reduced while the vehicle deceleration is changed within the range where the driver does not feel discomfort.

## Reference Signs List

1 CONTROL DEVICE
10 TRANSMISSION
20 TORQUE CONVERTER
25 LOCK-UP CLUTCH
26, 39 ACTUATOR
30 TRANSMISSION BODY
50 ENGINE
C1 INPUT CLUTCH
WL, WR DRIVE WHEEL

## Claims

**1.** A control device (1) for a transmission (10) that comprises: a lock-up mechanism (25) that is interposed between an engine (50) and the transmission (10); and an input clutch (C1) capable of connecting and disconnecting a torque transmission between the engine (50) and a drive wheel (WL, WR), wherein
an amount of vehicle deceleration change, which can be sensed by a driver, is obtained based on vehicle deceleration at a time when the input clutch (C1) is not released and a previously set reference value,
a target amount of the vehicle deceleration change, which cannot be sensed by the driver, is set based on the amount of the vehicle deceleration change, and
an engaging force of the lock-up mechanism (25) and/or the input clutch (C1) is controlled to reduce the vehicle deceleration such that the target amount of the vehicle deceleration change is obtained.

2. The control device (1) for a transmission (10) according to claim 1, wherein the amount of the vehicle deceleration change is obtained according to a Weber's law.

3. The control device (1) for a transmission (10) according to claim 2, wherein the reference value is a Weber ratio of the Weber's law.

4. The control device (1) for a transmission (10) according to any one of claims 1 to 3, wherein the engaging force is prohibited from being controlled during sudden braking of the vehicle or during control for an increase of an engine brake force.

5. The control device (1) for a transmission (10) according to any one of claims 1 to 4, wherein a gradient of a change in the engaging force is changed in response to a gradient of the change in the vehicle deceleration.

6. The control device (1) for a transmission (10) according to any one of claims 1 to 5, wherein the gradient of the change in the engaging force is increased with an increasing gradient of the change in the vehicle deceleration.

7. The control device (1) for a transmission (10) according to any one of claims 1 to 4, wherein a clutch control amount is corrected based on a difference between target vehicle deceleration and currently actual vehicle deceleration, when the lock-up mechanism (25) or the input clutch (C1) generates the engaging force in response to the clutch control amount.

8. The control device (1) for a transmission (10) according to claim 5 or 6, wherein a gradient of a change in a clutch control amount is corrected based on a difference between a target gradient of the change in the vehicle deceleration and a currently actual gradient of the change in the vehicle deceleration, when the lock-up mechanism (25) or the input clutch (C1) generates the engaging force in response to the clutch control amount.

**Patentansprüche**

1. Steuervorrichtung (1) für ein Getriebe (10), das aufweist: einen Wandlersperrmechanismus (25), der sich zwischen einer Maschine (50) und dem Getriebe (10) befindet; und eine Eingangskupplung (C1), die in der Lage ist, eine Drehmomentübertragung zwischen der Maschine (50) und einem Antriebsrad (WL, WR) zu verbinden oder zu trennen, wobei
eine Größe der Fahrzeugverzögerungsänderung, die durch einen Fahrer gespürt werden kann, auf Basis der Fahrzeugverzögerung zu einer Zeit, da die Eingangskupplung (C1) nicht gelöst ist, und eines vorher festgelegten Referenzwerts erhalten wird,
eine Sollgröße der Fahrzeugverzögerungsänderung, die durch den Fahrer nicht gespürt werden kann, auf Basis der Größe der Fahrzeugverzögerungsänderung eingestellt wird, und
eine Eingriffskraft des Wandlersperrmechanismus (25) und/oder der Eingangskupplung (C1) so gesteuert wird, dass die Fahrzeugverzögerung so verringert wird, dass die Sollgröße der Fahrzeugverzögerungsänderung erhalten wird.

2. Steuervorrichtung (1) für ein Getriebe (10) nach Anspruch 1, wobei die Größe der Fahrzeugverzögerungsänderung nach dem Weberschen Gesetz erhalten wird.

3. Steuervorrichtung (1) für ein Getriebe (10) nach Anspruch 2, wobei der Referenzwert ein Weberverhältnis des Weberschen Gesetzes ist.

4. Steuervorrichtung (1) für ein Getriebe (10) nach einem der Ansprüche 1 bis 3, wobei verhindert wird, dass die Eingriffskraft während eines plötzlichen Bremsens des Fahrzeugs oder während der Steuerung für eine Zunahme einer Maschinen-Bremskraft gesteuert wird.

5. Steuervorrichtung (1) für ein Getriebe (10) nach einem der Ansprüche 1 bis 4, wobei ein Gradient einer Änderung der Eingriffskraft als Reaktion auf einen Gradienten der Änderung der Fahrzeugverzögerung geändert wird.

6. Steuervorrichtung (1) für ein Getriebe (10) nach einem der Ansprüche 1 bis 5, wobei der Gradient der Änderung der Eingriffskraft in dem Maße erhöht wird, in dem ein Gradient der Änderung der Fahrzeugverzögerung erhöht wird.

**7.** Steuervorrichtung (1) für ein Getriebe (10) nach einem der Ansprüche 1 bis 4, wobei eine Kupplungssteuergröße auf Basis einer Differenz zwischen der Sollfahrzeugverzögerung und der gegenwärtig anliegenden Fahrzeugverzögerung korrigiert wird, wenn der Wandlersperrmechanismus (25) oder die Eingangskupplung (C1) die Eingriffskraft als Reaktion auf die Kupplungssteuergröße erzeugt.

**8.** Steuervorrichtung (1) für ein Getriebe (10) nach Anspruch 5 oder 6, wobei ein Gradient einer Änderung einer Kupplungssteuergröße auf Basis einer Differenz zwischen einem Sollgradienten der Änderung der Fahrzeugverzögerung und einem gegenwärtig anliegenden Gradienten der Änderung der Fahrzeugverzögerung korrigiert wird, wenn der Wandlersperrmechanismus (25) oder die Eingangskupplung (C1) die Eingriffskraft als Reaktion auf die Kupplungssteuergröße erzeugt.

## Revendications

**1.** Dispositif de commande (1) pour une transmission (10) qui comprend :

un mécanisme de verrouillage (25) qui est intercalé entre un moteur (50) et la transmission (10) ; et un embrayage d'entrée (C1) capable de raccorder et de déconnecter une transmission de couple entre le moteur (50) et une roue motrice (WL, WR), dans lequel :

une quantité de changement de décélération de véhicule, qui peut être détectée par un conducteur, est obtenue en fonction de la décélération du véhicule au moment où l'embrayage d'entrée (C1) n'est pas relâché et d'une valeur de référence déterminée au préalable,
une quantité cible du changement de décélération de véhicule, qui ne peut pas être détectée par le conducteur, est déterminée en fonction de la quantité du changement de décélération de véhicule, et
une force de mise en prise du mécanisme de verrouillage (25) et/ou de l'embrayage d'entrée (C1) est contrôlée pour réduire la décélération du véhicule de sorte que la quantité cible du changement de décélération du véhicule est obtenue.

**2.** Dispositif de commande (1) pour une transmission (10) selon la revendication 1, dans lequel la quantité de changement de décélération de véhicule est obtenue selon une loi de Weber.

**3.** Dispositif de commande (1) pour une transmission (10) selon la revendication 2, dans lequel la valeur de référence est un rapport de Weber de la loi de Weber.

**4.** Dispositif de commande (1) pour une transmission (10) selon l'une quelconque des revendications 1 à 3, dans lequel la force de mise en prise ne peut pas être contrôlée pendant un freinage brusque du véhicule ou pendant le contrôle d'une augmentation d'une force de freinage de moteur.

**5.** Dispositif de commande (1) pour une transmission (10) selon l'une quelconque des revendications 1 à 4, dans lequel un gradient d'un changement de force de mise en prise est modifié en réponse à un gradient du changement de décélération de véhicule.

**6.** Dispositif de commande (1) pour une transmission (10) selon l'une quelconque des revendications 1 à 5, dans lequel le gradient du changement de force de mise en prise est augmenté avec un gradient d'augmentation du changement de décélération de véhicule.

**7.** Dispositif de commande (1) pour une transmission (10) selon l'une quelconque des revendications 1 à 4, dans lequel une quantité de commande d'embrayage est corrigée en fonction d'une différence entre la décélération de véhicule cible et la véritable décélération de véhicule actuelle, lorsque le mécanisme de verrouillage (25) ou l'embrayage d'entrée (C1) génère la force de mise en prise en réponse à la quantité de commande d'embrayage.

**8.** Dispositif de commande (1) pour une transmission (10) selon la revendication 5 ou 6, dans lequel un gradient d'un changement d'une quantité de commande d'embrayage est corrigé en fonction d'une différence entre un gradient cible du changement de décélération de véhicule et un véritable gradient actuel du changement de décélération de véhicule, lorsque le mécanisme de verrouillage (25) ou l'embrayage d'entrée (C1) génère la force de mise en prise en réponse à la quantité de commande d'embrayage.

FIG.1

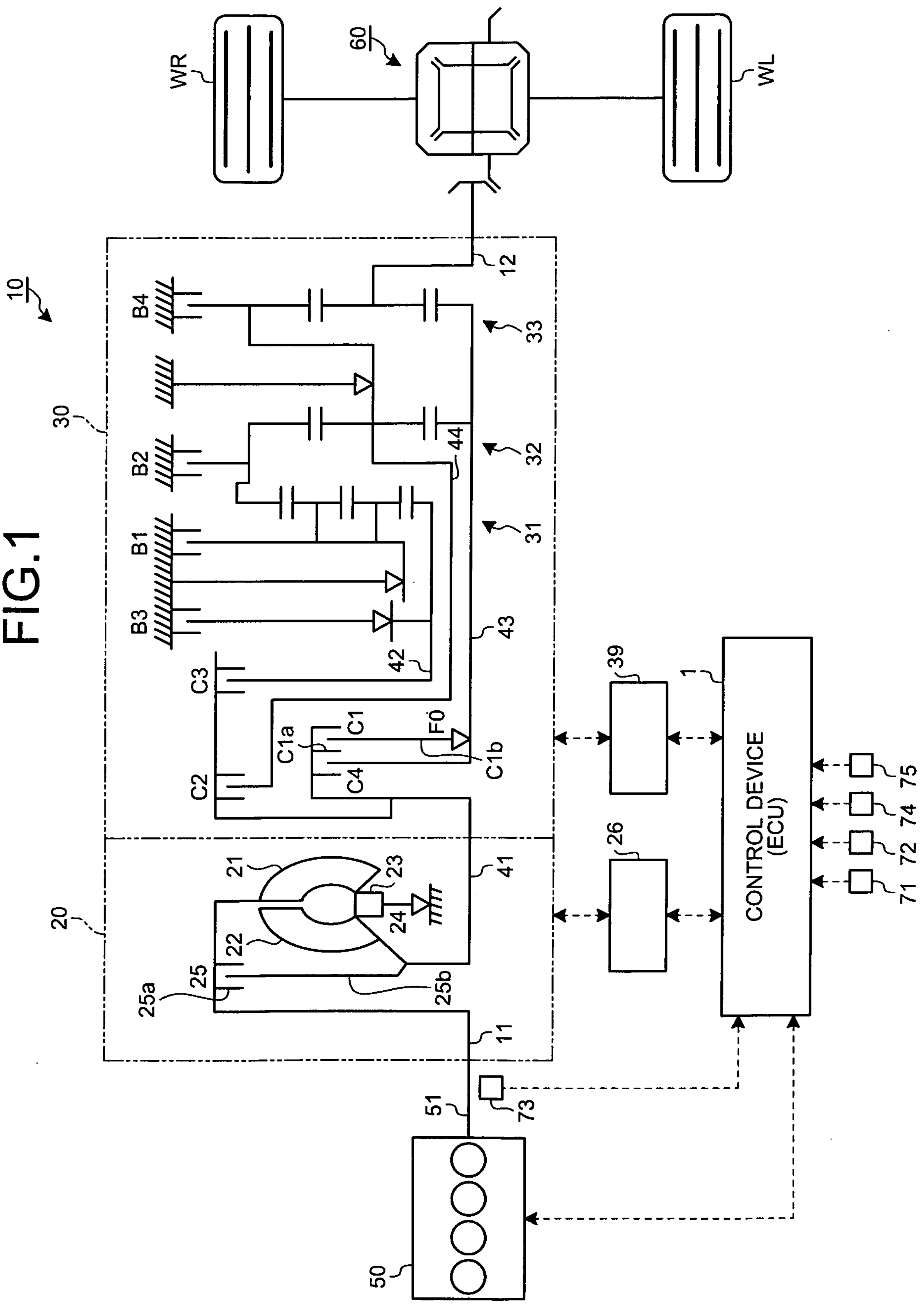
WR
60
WL
10
12
B4
33
30
B2
44
32
B1
31
B3
43
42
C3
C1
C1a
F0
C2
C4
C1b
39
1
20
21
23
41
24
22
25
25a
25b
26
11
CONTROL DEVICE
(ECU)
75
74
72
71
51
73
50

FIG.2

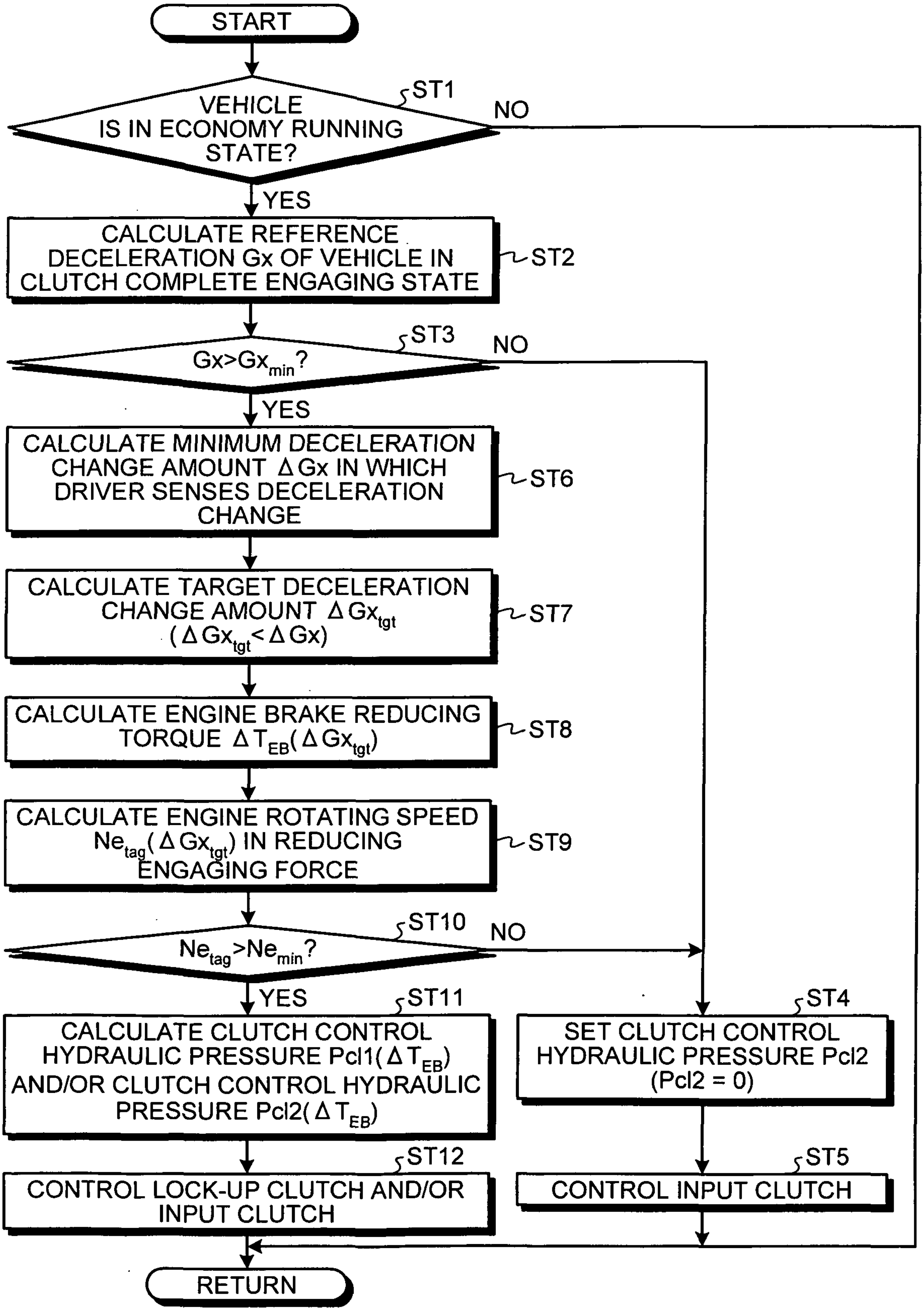
START
VEHICLE IS IN ECONOMY RUNNING STATE?
ST1
NO
YES
CALCULATE REFERENCE DECELERATION Gx OF VEHICLE IN CLUTCH COMPLETE ENGAGING STATE
ST2
$Gx>Gx_{min}$?
ST3
NO
YES
CALCULATE MINIMUM DECELERATION CHANGE AMOUNT ΔGx IN WHICH DRIVER SENSES DECELERATION CHANGE
ST6
CALCULATE TARGET DECELERATION CHANGE AMOUNT $\Delta Gx_{tgt}$ ($\Delta Gx_{tgt}<\Delta Gx$)
ST7
CALCULATE ENGINE BRAKE REDUCING TORQUE $\Delta T_{EB}(\Delta Gx_{tgt})$
ST8
CALCULATE ENGINE ROTATING SPEED $Ne_{tag}(\Delta Gx_{tgt})$ IN REDUCING ENGAGING FORCE
ST9
$Ne_{tag}>Ne_{min}$?
ST10
NO
YES
ST11
CALCULATE CLUTCH CONTROL HYDRAULIC PRESSURE $Pcl1(\Delta T_{EB})$ AND/OR CLUTCH CONTROL HYDRAULIC PRESSURE $Pcl2(\Delta T_{EB})$
ST4
SET CLUTCH CONTROL HYDRAULIC PRESSURE Pcl2 (Pcl2 = 0)
ST12
CONTROL LOCK-UP CLUTCH AND/OR INPUT CLUTCH
ST5
CONTROL INPUT CLUTCH
RETURN

FIG.3

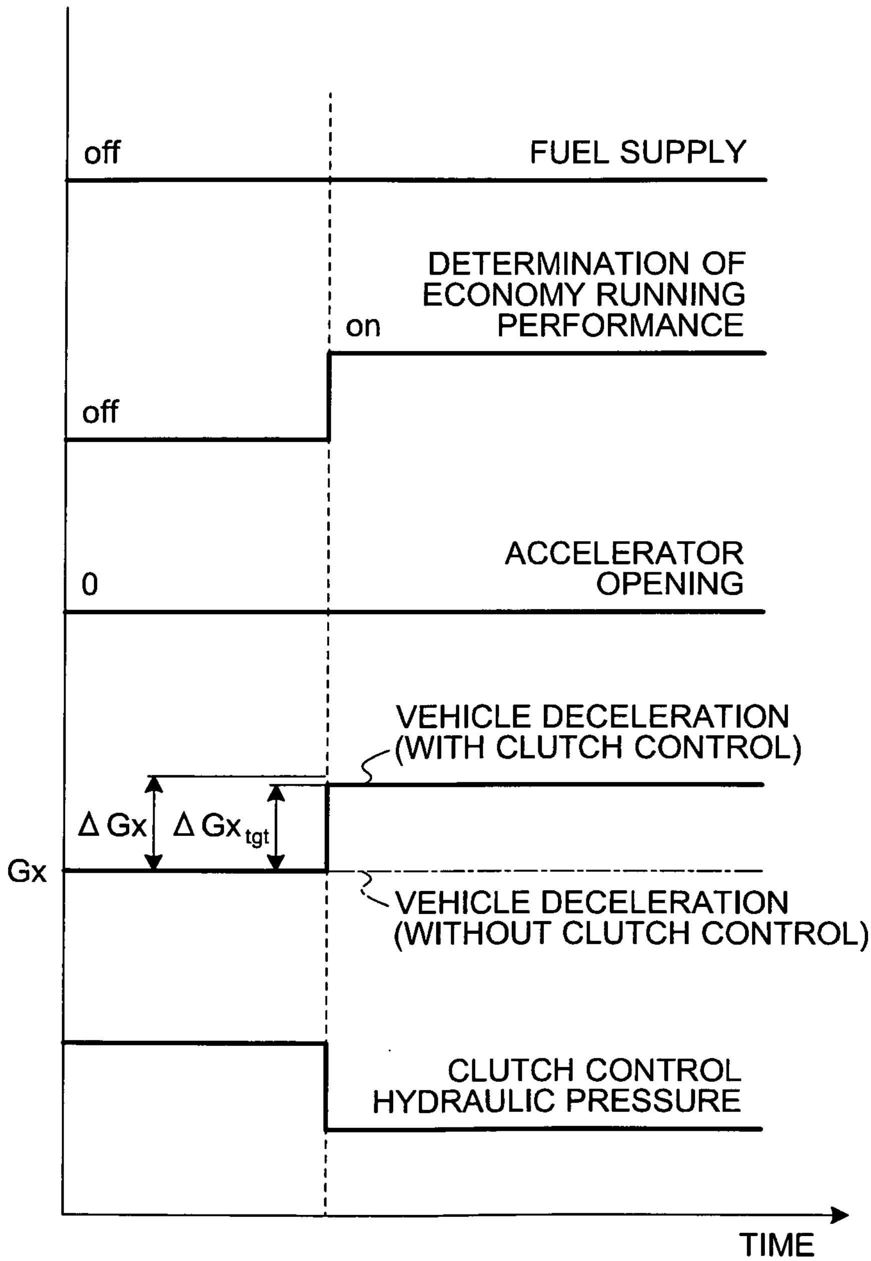
off
FUEL SUPPLY
DETERMINATION OF ECONOMY RUNNING PERFORMANCE
on
off
0
ACCELERATOR OPENING
VEHICLE DECELERATION (WITH CLUTCH CONTROL)
Δ Gx
Δ Gx tgt
Gx
VEHICLE DECELERATION (WITHOUT CLUTCH CONTROL)
CLUTCH CONTROL HYDRAULIC PRESSURE
TIME

FIG.4

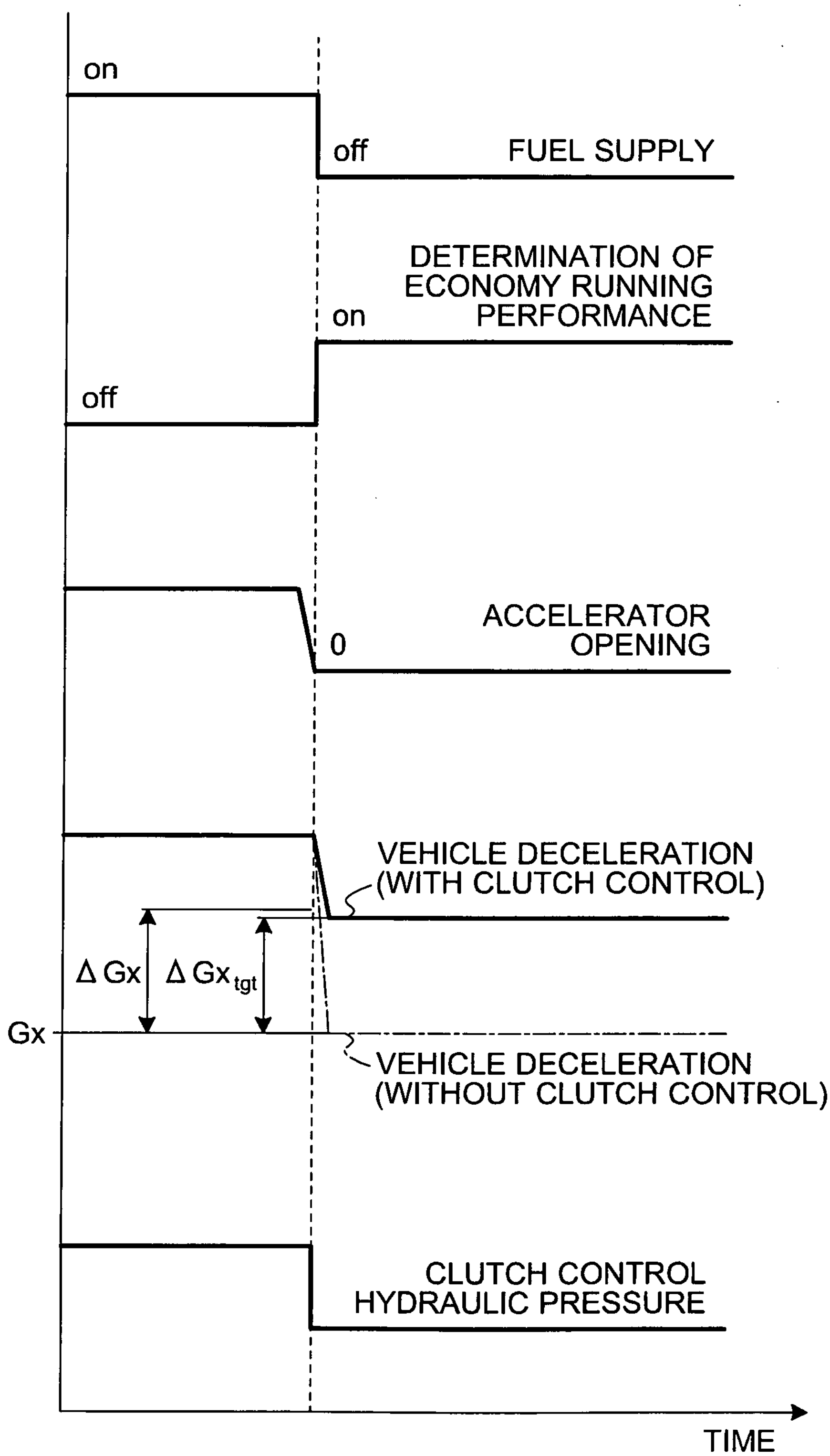
on
off
FUEL SUPPLY
DETERMINATION OF ECONOMY RUNNING PERFORMANCE
on
off
ACCELERATOR OPENING
0
VEHICLE DECELERATION (WITH CLUTCH CONTROL)
Δ Gx
Δ Gx tgt
Gx
VEHICLE DECELERATION (WITHOUT CLUTCH CONTROL)
CLUTCH CONTROL HYDRAULIC PRESSURE
TIME

FIG.5

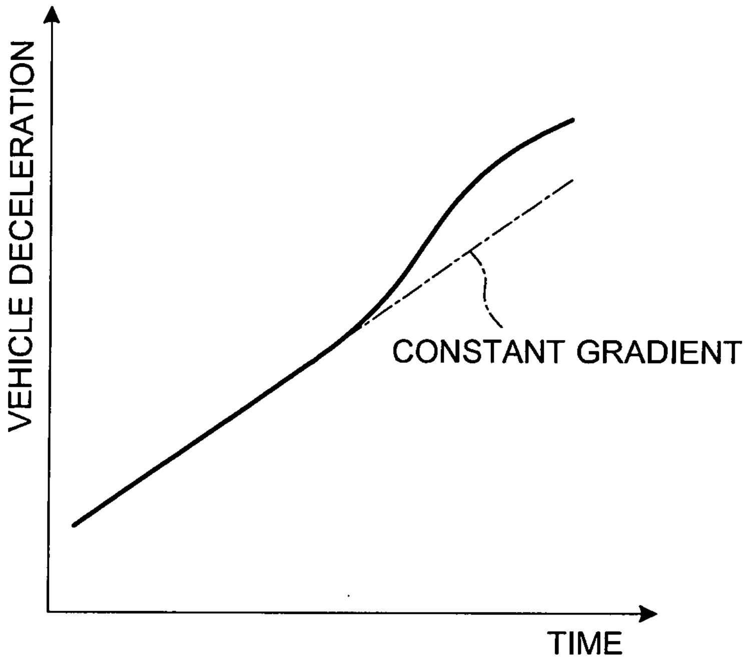

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001304003 A
- JP 2005313831 A
- JP 2001056050 A
- JP H10073160 A
- US 20100204883 A1